# EUROPÄISCHE PATENTANMELDUNG

(11) **EP 1 502 802 A1**
(43) Veröffentlichungstag der Anmeldung: **02.02.2005**
(21) Anmeldenummer: 04016659.7
(22) Anmeldetag: 15.07.2004
(51) Int. Cl.: B60K 20/02, F16H 59/02

(54) **Schalthebel mit Display**

(30) Priorität: 30.07.2003 DE 20311729 U
(71) Anmelder: Eissmann GmbH, 72574 Bad Urach (DE)
(72) Erfinder: Mauser, Jörg, 72138 Kirchentellinsfurt (DE); Wörn, Frank, 72138 Kirchentellinsfurt (DE)
(74) Vertreter: Kohler Schmid Möbus

(57) **Zusammenfassung**

Ein Schaltknauf (1) eines Schalthebels in einem Kraftfahrzeug, wobei im Kopfbereich des Schaltknaufs (1) ein in Betriebseinbaulage für den Fahrer des Kraftfahrzeugs sichtbarer optischer Informationsträger vorgesehen ist und wobei der optische Informationsträger eine Anzeigeeinrichtung mit einem Display (2) mit veränderbarer Anzeige umfasst.

## Beschreibung

Die Erfindung betrifft einen Schaltknauf eines Schalthebels in einem Kraftfahrzeug, wobei im Kopfbereich des Schaltknaufs ein in Betriebseinbaulage für den Fahrer des Kraftfahrzeugs sichtbarer optischer Informationsträger vorgesehen ist.

Ein solcher Schaltknauf ist beispielsweise bekannt aus der DE 198 44 249 A1. Der bekannte Schaltknauf enthält eine Sichtblende mit einem Anzeigesymbol, welches das Gangschaltschema eines Kraftfahrzeugs mit Schaltgetriebe darstellt. Um die Anzeigesymbole dreidimensional sichtbar zu machen, ist bei der bekannten Vorrichtung eine linsenähnliche Sichtblende vorgesehen, deren Krümmungsradius an der Rückseite ungleich zu dem der Sichtseite verläuft.

Aus der DE 297 16 666 U1 ist ein Schaltknopf für Schalthebel von Kraftfahrzeugen bekannt, in dessen Innerem eine Beleuchtungseinrichtung vorgesehen ist, wobei der Schaltknopf auf seiner Oberseite bereichsweise lichtdurchlässig, aber nicht transparent ausgebildet ist. Damit kann verhindert werden, dass tagsüber die Beleuchtungseinrichtung im Inneren des Schaltknopfs sichtbar wird. Der Informationsträger ist in diesem Fall eine Plakette, welche neben dem Gangschaltschema für das Kraftfahrzeug auch ein Firmenlogo enthält, welches beispielsweise auf den Hersteller des Kraftfahrzeugs hinweisen kann, sodass der Schaltknopf neben seinen funktionalen Aufgaben auch dekorative und/oder Werbefunktionen erfüllt.

Bei den bekannten Vorrichtungen ist der für den Fahrer sichtbare optische Informationsträger im Schaltknauf des Schalthebels allerdings nur mit statischer Information versehen.

Aufgabe der vorliegenden Erfindung ist es demgegenüber, den im Schaltknauf eines gattungsgemäßen Schalthebels vorhandenen Raum für die Übertragung von erheblich mehr und vielfältigerer optischer Information zu nutzen.

Erfindungsgemäß wird diese Aufgabe auf überraschend einfache, aber wirkungsvolle Weise dadurch gelöst, dass der optische Informationsträger eine Anzeigeeinrichtung mit einem Display mit veränderbarer Anzeige umfasst. Dadurch kann trotz des zur Verfügung stehenden, eng begrenzten Raums eines Schaltknaufs in einem Schalthebel eine nahezu unerschöpfliche Menge von optischer Information an einen Nutzer, insbesondere den Fahrer eines Kraftfahrzeugs übertragen werden, ohne dass dazu aufwändige Einbauten erforderlich wären.

Bei einer besonders bevorzugten Ausführungsform enthält der erfindungsgemäße Schaltknauf ein Display mit einer LCD(= Liquid Crystal Display)-Einheit. Derartige LCD-Anzeigen sind als Massenware preisgünstig im Handel erhältlich und können in nahezu beliebiger Weise für die Übertragung unterschiedlichster optischer Informationen genutzt werden.

Bei einer weiteren vorteilhaften Ausführungsform enthält das Display eine LED(= Light Emitting Diode)-Einheit. Dadurch kann die optische Information des Displays auch im Dunkeln erfasst werden.

Bei einer weiteren besonders bevorzugten Ausführungsform des erfindungsgemäßen Schaltknaufs ist das Display beleuchtbar.

Dies kann bei einer Weiterbildung beispielsweise mittels Auflicht durch eine zumindest teilweise transparente Abdeckung erreicht werden, was besonders unaufwändig ist und keinerlei Energiequellen erforderlich macht, da das Tageslicht zur Beleuchtung des Displays verwendet wird.

Alternativ oder zusätzlich kann bei einer Weiterbildung aber auch das Display mittels Hinterleuchtung beleuchtbar gestaltet sein. Auf diese Weise kann die optische Information auch nachts vom Display entnommen werden.

In einer bevorzugten Weiterbildung der oben genannten Ausführungsformen ist das Display mittels einer strombetriebenen Lichtquelle beleuchtbar, die entweder über eine Batterie oder einen Akku, vorzugsweise aber über die Batterie oder Lichtmaschine des Kraftfahrzeugs mit Energie versorgt wird.

Um Energie zu sparen, kann bei einer besonders bevorzugten Weiterbildung die Lichtquelle aktivierbar und deaktivierbar sein, vorzugsweise mittels einer Schalteinrichtung, insbesondere einem am Schaltknauf oder Schalthebel angeordneten Schalter, beispielsweise einer Schalttaste oder einem Schaltknopf.

Vorteilhaft ist auch eine Weiterbildung, bei der die Lichtquelle auf- und abblendbar bzw. stufenlos oder in Stufen in ihrer Beleuchtungsintensität verstellbar ist. Dadurch lässt sich die Beleuchtungsstärke individuell auf die jeweiligen Bedürfnisse des Benutzers, insbesondere auch im Hinblick auf sich verändernde Umgebungsbeleuchtung einstellen.

Bei einer besonders bevorzugten Ausführungsform des erfindungsgemäßen Schaltknaufs ist die optische Anzeigeeinrichtung über die Fahrzeugelektronik des Kraftfahrzeugs ansteuerbar. Über die Ansteuerwege können auch Daten von der Fahrzeugelektronik auf die Anzeigeeinrichtung im Schaltknauf übertragen werden.

Vorteilhaft ist auch eine Ausführungsform, bei der das Display aktivierbar und deaktivierbar ist, vorzugsweise mittels einer Schalteinrichtung, insbesondere einem am Schaltknauf oder Schalthebel angeordneten Schalter, beispielsweise einer Schalttaste. Dadurch kann die optische Anzeigeeinheit je nach Bedarf vom Nutzer ein- oder ausgeschaltet werden.

Bei einer weiteren bevorzugten Ausführungsform der Erfindung ist eine, vorzugsweise im Schaltknauf integrierte Umschalttaste für diverse unterschiedliche optische Anzeigen auf dem Display vorgesehen. Damit kann der Nutzer die jeweilige Art der auf dem Display angezeigten optischen Information manuell auswählen.

Bevorzugt ist die am Display angezeigte optische Information vorgebbar und insbesondere über die Fahrzeugelektronik des Kraftfahrzeugs eingebbar und/oder programmierbar. Dadurch lassen sich fast beliebige Varianten von Funktionen für die Funktionsanzeige im erfindungsgemäßen Schaltknauf realisieren und vom jeweiligen Nutzer individuell einstellen.

Eine Variante der Erfindung umfasst die am Display angezeigte optische Information einer Uhrenfunktion, insbesondere eine Zeit- oder Datumsanzeige. So genügt ein kurzer Blick auf den erfindungsgemäßen Schaltknauf, damit der Fahrer die jeweilige Uhrzeit oder das Datum erfassen kann.

Bei weiteren Ausführungsformen kann die am Display angezeigte optische Information zusätzlich oder altemativ aber auch ein Gangschaltschema des jeweiligen Kraftfahrzeugs umfassen, wie dies im Stand der Technik ebenfalls vorgesehen ist, dort allerdings ausschließlich und als lediglich "statische" Information, die bei Verwendung der bekannten, oben diskutierten Plaketten, keine weiteren Arten von optischer Information übermittelt.

Des Weiteren kann die am Display angezeigte optische Information einen Schriftzug, ein Emblem, ein Logo oder eine Marke des Kraftfahrzeugherstellers umfassen. Dies ist ebenfalls per se aus dem Stand der Technik bekannt, jedoch nicht in Verbindung mit weiter veränderbaren Informationen.

Eine bisher nicht vorhandene Möglichkeit eröffnet sich bei dem erfindungsgemäßen Schaltknauf dadurch, dass die am Display angezeigte optische Information eine aktuelle Konstellation des Getriebes bzw. der Gangschaltung des Kraftfahrzeugs, insbesondere eine Anzeige des aktuell eingelegten Gangs umfassen kann. Diese Information trägt ständig wechselnden Betriebsbedingungen Rechnung.

Äußerst nützlich ist auch eine Ausführungsform der Erfindung, bei der die am Display angezeigte optische Information eine Fehleranzeige umfasst. So können beispielsweise Störungen im Getriebe, aber auch im Motor oder in der Elektrik des Kraftfahrzeugs angezeigt werden.

Alternativ oder ergänzend kann die am Display angezeigte optische Information eine Wamanzeige oder einen Hinweis auf eine besondere Betriebssituation des Kraftfahrzeugs umfassen. Eine solche Warnanzeige oder ein Hinweis eine Betriebssituation könnte natürlich auch im Instrumentenbrett des Kraftfahrzeugs angezeigt werden, aufgrund der vorliegenden Erfindung ist diese Anzeige jedoch alternativ oder zusätzlich nunmehr auch im Schaltknauf des Schalthebels vorgesehen, sodass der Fahrer des Kraftfahrzeugs auch in einer Betriebssituation, in der er gerade optischen Kontakt zum Schalthebel hat, einen Wamhinweis wirksam erhalten kann.

Bei einer besonders bevorzugten Weiterbildung dieser Ausführungsform umfasst die am Display angezeigte optische Information eine Abstandsanzeige des Kraftfahrzeugs relativ zu einem Hindernis. Abstandsmessanlagen sind bereits in einer Vielzahl höherwertiger Kraftfahrzeuge beispielsweise als Einparkhilfen vorgesehen. Für den Fahrer des Kraftfahrzeugs stellt es eine Erleichterung dar, wenn die optische Information über den Abstand nicht nur in einem Display im Instrumentenbrett oder ausschließlich akustisch, sondem auch durch einen Blick auf den Schalthebel erfassbar wird.

Insbesondere im Zusammenhang mit Wamfunktionen kann bei vorteilhaften Ausführungsformen der Erfindung die optische Anzeigeeinrichtung eine Blinkfunktion, insbesondere ein intermittierend aufleuchtendes Blinklicht umfassen.

Zusätzlich kann bei weiteren Ausführungsformen die optische Anzeigeeinrichtung auch mit einer akustischen Signaleinrichtung gekoppelt sein, welche entweder direkt im Schaltknauf des Schalthebels integriert ist, aber auch an einer anderen Stelle im Fahrzeug angeordnet sein kann.

Besonders bevorzugt ist die optische Anzeigeeinrichtung mit dem Display so gestaltet, dass sie gegen eine herkömmliche Plakette im Kopfbereich des Schaltknaufs austauschbar ist. Damit lässt sich die erfindungsgemäße Wirkung ohne großen zusätzlichen Aufwand, insbesondere ohne aufwändige Montage in einem vorhandenen Schaltknauf realisieren.

Bei Ausführungsformen der Erfindung kann der Schalthebel mit dem erfindungsgemäßen Schaltknauf als Ansteuerelement für ein Gangschaltgetriebe, ein Automatikgetriebe oder ein Halbautomatikgetriebe ausgeführt sein. Je nachdem wird die optische Anzeigeeinrichtung ein geometrisch an die Form und Größe des jeweils eingesetzten Schaltknaufs angepasste Displayvorrichtung aufweisen.

Zusätzlich zur optischen Anzeige kann bei der vorliegenden Erfindung aber auch eine taktile Anzeigeeinrichtung im Schaltknauf des Schalthebels eingesetzt werden, um die oben diskutierten Informationen kurzzeitig auch ohne Sichtkontakt zum Schalthebel an den jeweiligen Bediener zu übermitteln.

Weitere Einzelheiten und Vorteile der Erfindung ergeben sich aus der beigefügten Zeichnung und dazugehörigen Beschreibung. Die detailliert aufgeführten Merkmale können jeweils einzeln für sich oder in beliebigen Kombinationen Realisierungen der vorliegenden Erfindung beschreiben.

Es zeigen:
- Fig. 1: einen schematischen Längsschnitt durch einen Schalthebel mit einem erfindungsgemäßen Schaltknauf;
- Fig. 2a: eine schematische Seitenansicht auf eine Ausführungsform des erfindungsgemäßen Schaltknaufs mit einer Schalttaste; und
- Fig. 2b: eine schematische Draufsicht auf den Schaltknauf nach Fig. 2a von oben in Richtung seiner Längsachse mit Blick auf das Display der Anzeigeeinrichtung.

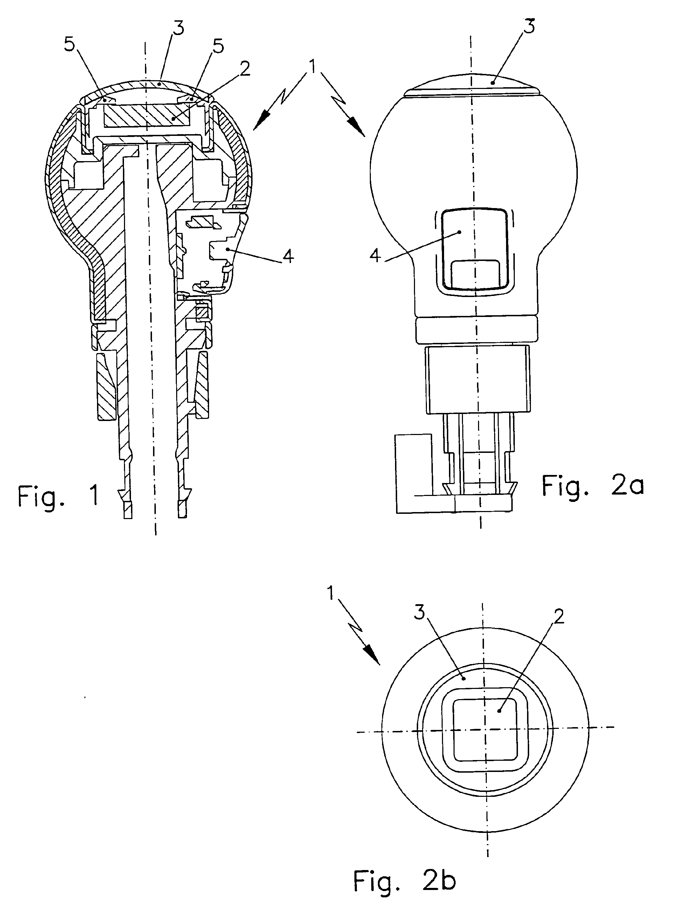

Der in Fig. 1 schematisch dargestellte Schaltknauf 1 weist auf der Oberseite seines Kopfbereichs eine Anzeigeeinrichtung auf, die ein Display 2 mit veränderbarer Anzeige sowie eine zumindest teilweise transparente Abdeckung 3 umfasst, durch welche die Anzeige des Displays 2 von außerhalb des Schaltknaufs 1 durch einen Blick auf dessen Kopfbereich optisch erfasst werden kann.

Vorzugsweise enthält das Display 2 eine LCD-Einheit. Zusätzlich oder alternativ kann aber auch eine LED-Einheit vorgesehen sein. Bei in der Zeichnung nicht näher dargestellten Ausführungsformen der Erfindung kann das Display zusätzlich beleuchtbar sein. In der Regel wird dies durch Hinterleuchtung mit einer strombetriebenen Lichtquelle realisiert werden.

Durch eine am Schaltknauf 1 beispielsweise seitlich unterhalb des Kopfbereichs angeordnete Schalttaste 4, wie sie auch aus Fig. 2a erkennbar ist, kann das Display 2 und/oder eine Lichtquelle zur Beleuchtung des Displays 2 aktiviert oder deaktiviert werden. Über eine solche Schalttaste 4 ist auch eine stufenlose Verstellbarkeit der Beleuchtungsintensität möglich.

Weiterhin kann mit einer derartigen Umschalttaste auch eine Umschaltung für diverse unterschiedliche optische Anzeigen auf dem Display 2 des Schaltknaufs 1 bewirkt werden.

Bevorzugt wird die erfindungsgemäße Anzeigeeinrichtung mit dem Display 2 und der Abdeckung 3 geometrisch so gestaltet sein, dass sie problemlos gegen die herkömmlicherweise im Kopfbereich eines Schaltknaufs angeordnete Plakette austauschbar ist. Dazu ist lediglich eine Formanpassung an eine bereits vorhandene Aufnahmeeinrichtung 5 erforderlich.

## Patentansprüche

1. Schaltknauf (1) eines Schalthebels in einem Kraftfahrzeug, wobei im Kopfbereich des Schaltknaufs (1) ein in Betriebseinbaulage für den Fahrer des Kraftfahrzeugs sichtbarer optischer Informationsträger vorgesehen ist,
**dadurch gekennzeichnet,**
**dass** der optische Informationsträger eine Anzeigeeinrichtung mit einem Display (2) mit veränderbarer Anzeige umfasst.

2. Schaltknauf nach Anspruch 1, **dadurch gekennzeichnet, dass** die optische Anzeigeeinrichtung eine LCD(=Liquid Crystal Display)-Einheit enthält.

3. Schaltknauf nach einem der vorhergehenden Ansprüche, **dadurch gekennzeichnet, dass** die optische Anzeigeeinrichtung eine LED(=Light Emitting Diode)-Einheit enthält.

4. Schaltknauf nach einem der vorhergehenden Ansprüche, **dadurch gekennzeichnet, dass** das Display (2) beleuchtbar ist.

5. Schaltknauf nach Anspruch 4, **dadurch gekennzeichnet, dass** das Display (2) mittels Auflicht durch eine zumindest teilweise transparente Abdeckung (3) beleuchtbar ist.

6. Schaltknauf nach Anspruch 4 oder 5, **dadurch gekennzeichnet, dass** das Display (2) mittels Hinterleuchtung beleuchtbar ist.

7. Schaltknauf nach einem der Ansprüche 4 bis 6, **dadurch gekennzeichnet, dass** das Display (2) mittels einer strombetriebenen Lichtquelle beleuchtbar ist.

8. Schaltknauf nach Anspruch 7, **dadurch gekennzeichnet, dass** die Lichtquelle aktivierbar und deaktivierbar ist, vorzugsweise mittels einer Schalteinrichtung, insbesondere einem am Schaltknauf (1) oder Schalthebel angeordneten Schalter, beispielsweise einer Schalttaste (4).

9. Schaltknauf nach Anspruch 7 oder 8, **dadurch gekennzeichnet, dass** die Lichtquelle auf- und abblendbar bzw. stufenlos oder in Stufen in ihrer Beleuchtungsintensität verstellbar ist.

10. Schaltknauf nach einem der vorhergehenden Ansprüche, **dadurch gekennzeichnet, dass** die optische Anzeigeeinrichtung über die Fahrzeugelektronik des Kraftfahrzeugs ansteuerbar ist.

11. Schaltknauf nach einem der vorhergehenden Ansprüche, **dadurch gekennzeichnet, dass** das Display (2) aktivierbar und deaktivierbar ist, vorzugsweise mittels einer Schalteinrichtung, insbesondere einem am Schaltknauf (1) oder Schalthebel angeordneten Schalter, beispielsweise einer Schalttaste (4).

12. Schaltknauf nach einem der vorhergehenden Ansprüche, **dadurch gekennzeichnet, dass** eine, vorzugsweise im Schaltknauf (1) integrierte Umschalttaste (4) für diverse unterschiedliche optische Anzeigen auf dem Display (2) vorgesehen ist.

13. Schaltknauf nach einem der vorhergehenden Ansprüche, **dadurch gekennzeichnet, dass** die am Display (2) angezeigte optische Information vorgebbar, insbesondere über die Fahrzeugelektronik des Kraftfahrzeugs eingebbar und/oder programmierbar ist.

14. Schaltknauf nach einem der vorhergehenden Ansprüche, **dadurch gekennzeichnet, dass** die am Display (2) angezeigte optische Information eine Uhrenfunktion, insbesondere eine Zeit- oder Datumsanzeige umfasst.

15. Schaltknauf nach einem der vorhergehenden Ansprüche, **dadurch gekennzeichnet, dass** die am Display (2) angezeigte optische Information ein Gangschaltschema des Kraftfahrzeugs umfasst.

16. Schaltknauf nach einem der vorhergehenden Ansprüche, **dadurch gekennzeichnet, dass** die am Display (2) angezeigte optische Information einen Schriftzug, ein Emblem, ein Logo oder eine Marke des Kraftfahrzeugherstellers umfasst.

17. Schaltknauf nach einem der vorhergehenden Ansprüche, **dadurch gekennzeichnet, dass** die am Display (2) angezeigte optische Information eine aktuelle Konstellation des Getriebes bzw. der Gangschaltung des Kraftfahrzeugs, insbesondere eine Anzeige des aktuell eingelegten Gangs umfasst.

18. Schaltknauf nach einem der vorhergehenden Ansprüche, **dadurch gekennzeichnet, dass** die am Display (2) angezeigte optische Information eine Fehleranzeige umfasst.

19. Schaltknauf nach einem der vorhergehenden Ansprüche, **dadurch gekennzeichnet, dass** die am Display (2) angezeigte optische Information eine Warnanzeige oder einen Hinweis auf eine besondere Betriebssituation des Kraftfahrzeugs umfasst.

20. Schaltknauf nach Anspruch 19, **dadurch gekennzeichnet, dass** die am Display (2) angezeigte optische Information eine Abstandsanzeige des Kraftfahrzeugs relativ zu einem Hindernis umfasst.

21. Schaltknauf nach einem der vorhergehenden Ansprüche, **dadurch gekennzeichnet, dass** die optische Anzeigeeinrichtung eine Blinkfunktion, insbesondere ein intermittierend aufleuchtendes Blinklicht umfasst.

22. Schaltknauf nach einem der vorhergehenden Ansprüche, **dadurch gekennzeichnet, dass** die optische Anzeigeeinrichtung mit einer akustischen Signaleinrichtung gekoppelt ist.

23. Schaltknauf nach einem der vorhergehenden Ansprüche, **dadurch gekennzeichnet, dass** die optische Anzeigeeinrichtung mit dem Display (2) so gestaltet ist, dass sie gegen eine herkömmliche Plakette im Kopfbereich des Schaltknaufs (1) austauschbar ist.

24. Schaltknauf nach einem der vorhergehenden Ansprüche, **dadurch gekennzeichnet, dass** der Schalthebel Ansteuerelement für ein Gangschaltungsgetriebe, Automatikgetriebe oder Halbautomatikgetriebe ist.

25. Schaltknauf nach einem der vorhergehenden Ansprüche, **dadurch gekennzeichnet, dass** zusätzlich zur optischen Anzeige auch eine taktile Anzeigeeinrichtung vorgesehen ist.
